# EUROPEAN PATENT SPECIFICATION

(11) **EP 3 840 345 B1**
(45) Date of publication and mention of the grant of the patent: **26.04.2023**
(21) Application number: 19217228.6
(22) Date of filing: 17.12.2019
(51) Int. Cl.: H04M 1/60, H04M 1/72409, G06F 3/16, H04S 7/00, H04R 5/04

(54) **AUDIO CONTROLLER AND AUDIO COMMUNICATION SYSTEM**
AUDIOSTEUERUNG UND AUDIOKOMMUNIKATIONSSYSTEM
CONTRÔLEUR AUDIO ET SYSTÈME DE COMMUNICATION AUDIO

(43) Date of publication of application: 23.06.2021
(73) Proprietor: GN Audio A/S, 2750 Ballerup (DK)
(72) Inventor: Skjoldborg, Erling, 2750 Ballerup (DK)
(74) Representative: GN Store Nord A/S

(56) References cited:
- EP-A1- 2 680 550
- EP-A1- 3 040 851
- US-A1- 2008 080 703
- US-A1- 2014 274 004
- US-A1- 2015 080 052
- US-A1- 2019 098 130

## Description

### TECHNICAL FIELD

The present invention relates to an audio controller that provides audio communication between a sound interface device, such as a headset or the like, and an audio gateway device, such as e.g. a personal computer or a mobile phone, thereby enabling a user to establish a conversation with a remote party through the sound interface device and the audio gateway device. The present invention further relates to an audio communication system comprising such an audio controller. The invention may e.g. be used to allow a further headset user to listen in on, or participate in, the conversation.

### BACKGROUND ART

A user of a sound interface device may sometimes wish to let e.g. a colleague listen in on, or participate in, an ongoing conversation with a remote party. In call centers, for instance, it is common that a supervisor from time to time monitors conversations between call agents in the call center and e.g. customers calling in to request services. In the prior art, solutions are known that can route audio signals of a conversation through a personal computer to and/or from a further headset user.

For instance, EP 3040851 B1 discloses a computer-implemented method of operating a computer controlled by an operating system that provides an audio subsystem allowing multiple applications executed by the computer to exchange audio signals with multiple sound interface devices. A computer executing the method enables a user to conduct a softphone call using one headset connected to the computer, while the user's supervisor may listen in on the softphone call using a second headset connected to the same computer. Even though the disclosed method may be executed without requiring any changes of the computer's hardware, its operating system or the softphone application, it may still be inconvenient for the supervisor to have to connect their headset to the agent's computer.

EP 2680550 B1 discloses a wireless kit configured to enable wireless communication between a telecommunication device and a hands-free communication device. The hands-free communication device has a first cable that has a hands-free connector part in one end and is connected to the hands-free communication device in another end. The wireless kit comprises a telecommunication device connector part configured to connect to the telecommunication device as well as a communication line between the telecommunication device connector part and the hands-free connector part. The communication line comprises a first transceiver and a second transceiver configured to establish a wireless audio connection therebetween upon activation, as well as a releasable connection positioned between the first transceiver and the second transceiver establishing a corded connection between the hands-free communication device and the telecommunication device when connected. The first transceiver is provided between the hands-free connector part and the releasable connection, and the second transceiver is provided in the telecommunication device connector part or between the telecommunication device connector part and the releasable connection. The wireless audio connection may be established upon activation of the first transceiver and the second transceiver. The first transceiver and the second transceiver may be activated upon disengagement of the releasable connection. The first transceiver and the second transceiver may be permanently activated to maintain a wireless link between the first transceiver and the second transceiver also when a corded connection is established between the headset and the telecommunication device. Although the disclosed wireless kit enables a wired and a wireless audio connection to coexist, it can only connect one hands-free communication device at a time.

US patent application 2019/098130 A1 relates to recording of phone call audio in customer service centers for subsequent analysis and storage. The patent application discloses a method for forking call audio channels. The method includes, during an active call, receiving a first audio stream of first call audio that originates from a far-end telephony device, and receiving a second audio stream of second call audio that originates from a microphone of a near-end headset. Further, the method includes generating, during the active call, a third audio stream containing the first call audio by processing the first audio stream, and generating a fourth audio stream containing the second call audio by processing the second audio stream. Still yet, the method includes, during the active call, generating a fifth audio stream containing the first call audio, and generating a sixth audio stream containing the second call audio. In addition, the method includes, during the active call, concurrently transmitting: the third audio stream, the fourth audio stream, the fifth audio stream, and the sixth audio stream. Some of the audio streams may be transmitted by wired or wireless connections.

US patent application 2014/274004 A1 discloses a multiple headset integrator that unifies multiple calling parties at a local end point of an audio communication with a remote calling party. Other peripheral communication devices may also be used, and controls may be provided on the multiple headset integrator or control signals may be passed from the headsets or other wearable communication devices. A wireless adapter may be used to connect a wireless headset to a USB port of the multiple headset integrator.

US patent application 2015/080052 A1 discloses a system for audio communication comprising: a peripheral unit and an interface unit, wherein the peripheral unit comprises a microphone and a speaker, and the peripheral unit is connectable to a telephone via the interface unit, the interface unit having a unique interface unit device address, and the peripheral unit having a unique peripheral unit device address, wherein the peripheral unit and the interface unit are mutually connectable via a wireless communication link for audio communication and via a detachable wired communication link for auxiliary data, and wherein the system further comprises automatic pairing routine for pairing the peripheral unit and the interface unit to establish the wireless communication link. The wired communication link is used for exchanging data for pairing of the peripheral unit and the interface unit.

There is thus still a need for other solutions.

### DISCLOSURE OF INVENTION

It is an object of the present invention to provide an audio controller that provides audio communication between a first sound interface device used by a first user and an audio gateway device, thereby enabling the first user to establish a conversation with a remote party through the first sound interface device and the audio gateway device, and further enables a second user of a second sound interface device to listen in on or participate in an established conversation. It is a further object of the present invention to provide an audio communication system with such an audio controller and with similar advantages.

These and other objects of the invention are achieved by the invention defined in the independent claims and further explained in the following description. Further objects of the invention are achieved by embodiments defined in the dependent claims and in the detailed description of the invention.

Within this document, the term "sound interface" refers to an interface suitable for transmitting a sound signal to a user in dependence on an audio output signal and/or for providing an audio input signal in dependence on a voice sound received from a user. The term "sound interface device" refers to an audio device that comprises or provides a one-way sound interface or, preferably, a two-way sound interface. A sound interface device thus comprises one or more sound transmitters and/or one or more sound receivers. A sound transmitter comprises one or more sound output transducers for providing the sound signal in dependence on the audio output signal. A sound receiver comprises one or more sound input transducers for providing the audio input signal in dependence on the received voice sound. Examples of known sound output transducers include loudspeakers and vibrators, e.g. based on electrodynamic, electromagnetic, electrostatic, piezoelectric and/or thermoelectric principles. Examples of known sound input transducers include microphones and vibration sensors, e.g. based on electrodynamic, electromagnetic, electrostatic, piezoelectric, thermoelectric and/or optical principles. Examples of sound interface devices include handsets, headsets, earphones, hands-free sets and speakerphones.

The term "audio communication network" refers to a network through which persons may exchange audio signals in order to communicate orally with each other. Examples of audio communication networks include e.g. local area computer networks (LAN), wide area computer networks (WAN), public telephony networks, IP telephony networks and mobile phone networks.

The term "audio gateway device" refers to an audio device capable of functioning as an interface between an audio communication network and one or more sound interface devices. An audio gateway device thus comprises a converter for converting network audio signals received from the audio communication network into audio and/or control signals that may be provided to one or more sound interface devices and/or a converter for converting audio and/or control signals received from one or more sound interface devices into audio communication signals that may be provided to the audio communication network. An audio gateway device may further comprise a signaling controller adapted to exchange control signals with the audio communication network in order to receive, maintain, reject, terminate and/or initiate audio communication calls through the audio communication network. The signaling controller may preferably perform the exchange of control signals with the audio communication network such that the audio gateway device can relieve a connected sound interface device of at least a portion of the control signaling required by the audio communication network. Thus, a connected sound interface device may be used in audio conversations although it is only capable of handling a subset - or none - of the control signals of the audio communication network. Examples of devices comprising or constituting an audio gateway device that may fall within this definition include desktop, laptop and tablet computers, desktop telephones, mobile or cell phones, smartphones, personal digital assistants, base units for wireless telephones, base units for wired or wireless headsets, telephone switch boards etc.

The term "audio controller" refers to a device capable of functioning as an interface between an audio gateway device and one or more sound interface devices. An audio controller thus comprises two or more audio interfaces for establishing audio communication with the respective audio devices as well as circuitry for routing audio signals between the connected audio devices. An audio controller may further comprise a user interface, mechanical features, circuitry, functional blocks or the like that may support a user in the handling of the audio devices.

Furthermore, when an element or entity is referred to as being "connected" or "coupled" to another element or entity, this includes direct connection (or coupling) as well as connection (or coupling) via intervening elements or entities, unless expressly stated otherwise. Also, unless expressly stated otherwise, when a signal is referred to as being "transmitted", "provided" or "conveyed" by a first entity to a second entity, this includes directly or indirectly transmitting the signal in its original form as well as any direct or indirect transmission that modifies the original signal and/or converts the signal into another domain and/or representation before it arrives at the second entity, provided that the information comprised by the signal received by the second entity is sufficient for the second entity to perform the specified actions with respect to the received signal.

Within this document, the singular forms "a", "an", and "the" specify the presence of a respective entity, such as a feature, an operation, an element or a component, but do not preclude the presence or addition of further entities. Likewise, the words "have", "include" and "comprise" specify the presence of respective entities, but do not preclude the presence or addition of further entities. The term "and/or" specifies the presence of one or more of the associated entities. The steps or operations of any method disclosed herein need not be performed in the exact order disclosed, unless expressly stated so.

### BRIEF DESCRIPTION OF THE DRAWINGS

The invention will be explained in more detail below together with preferred embodiments and with reference to the drawings in which:
FIG. 1 shows an example scenario incorporating multiple embodiments of an audio communication system according to the invention,
FIG. 2 shows an embodiment of an audio controller according to the invention, and
FIG. 3 shows an embodiment of an audio communication system according to the invention.

The figures are schematic and simplified for clarity, and they just show details essential to understanding the invention, while other details may be left out. Where practical, like reference numerals and/or labels are used for identical or corresponding parts.

### MODE(S) FOR CARRYING OUT THE INVENTION

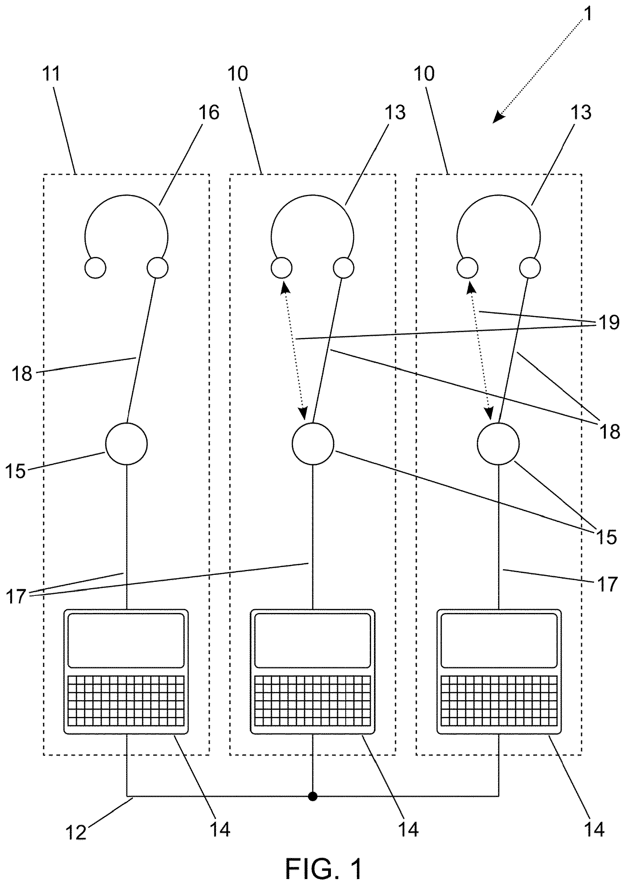

In the example scenario 1 shown in FIG. 1, two agent audio communication systems 10 are each assigned to an individual user (not shown) who acts as a call agent in a call center. A supervisor audio communication system 11 is assigned to a user (not shown) who acts as a supervisor for the call agents. The audio communication systems 10, 11 are interconnected through an audio communication network 12 embodied as a WAN. Each agent communication system 10 comprises a sound interface device 13 embodied as an agent headset, an audio gateway device 14 embodied as a personal computer (PC) and an audio controller 15. The supervisor communication system 11 comprises a sound interface device 16 embodied as a supervisor headset, an audio gateway device 14 embodied as a PC and an audio controller 15. The PC's 14 of the audio communication systems 10, 11 exchange data with each other through the WAN 12.

Each PC 14 executes a telephony application program (not shown) enabling the PC 14 to exchange audio signals with one or more remote parties. The telephony application program may e.g. enable the PC 14 to exchange audio signals with another PC 14 through the WAN 12 to enable two call agents to engage in an audio conversation with each other through their respective headsets 13 and audio controllers 15. The WAN 12 may preferably further extend to, connect with or comprise a public telecommunication network (not shown), such as e.g. an IP telephony network or a mobile phone network, and the telephony application program may further enable the PC 14 to exchange audio signals with other audio gateway devices through the public telecommunication network, thus enabling call agents to engage in audio conversations with people in remote locations.

Each audio controller 15 is connected to the respective PC 14 by means of a detachable wired audio connection 17. Each agent headset 13 is normally connected to the respective audio controller 15 by means of a detachable wired audio connection 18, but may alternatively, or additionally, be connected through a wireless audio connection 19, thereby enabling the call agent to move away from the PC 14 while maintaining conversation with a remote party through the headset 13, the audio controller 15 and the PC 14. The telephony application program preferably further enables the call agent to control the audio controller 15 and/or the agent headset 13 by causing the PC 14 to transmit predefined commands, such as e.g. call control commands, connection requests for switching to wired communication or disconnection requests for switching to wireless communication, through the wired and/or wireless audio connections 17, 18, 19. Alternatively, or additionally, each PC 14 may execute an agent application program (not shown) enabling the call agent to cause the PC 14 to transmit any or all of such commands.

Switching from wireless to wired audio connections when the call agents are close to their PC's 14 may help in reducing disturbances of other wireless audio connections in the call center. As explained in further detail in the following, this switching further enables a correspondingly configured audio controller 15 to use the otherwise inactive wireless interface to connect to the supervisor headset 16 and thus enable the supervisor to listen in on an ongoing audio conversation.

The supervisor audio communication system 11 resembles the agent audio communication systems 10. The audio controller 15 is connected to the PC 14 by means of a detachable wired audio connection 17, and the supervisor headset 16 is connected to the audio controller 15 by means of a detachable wired audio connection and/or a wireless audio connection. In addition to, or instead of, or integrated into, the telephony application program, the supervisor's PC 14 executes a supervisor application program enabling the supervisor to select an agent and cause the PC 14 to transmit a predefined supervision request to the selected agent's PC 14 through the WAN 12. The telephony application program or the agent application program executing on the selected agent's PC 14 may in turn make the agent's PC 14 receive the predefined supervision request and pass it on to the agent's audio controller 15 through the detachable wired audio connection 17. As explained in further detail in the following, the selected agent's audio controller 15 may respond to receiving the predefined supervision request by establishing wireless audio communication with the supervisor headset 16 and pass on the audio signal received from the remote party to the supervisor headset 16 such that the supervisor may listen in on an ongoing audio conversation. A supervisor may thus initiate a supervision session between their headset 16 and a selected agent's audio controller 15 through interaction with the supervisor application program.

The wireless audio connections 19 are preferably established through secure wireless transceivers that transmit and receive encrypted audio signals, such as e.g. Bluetooth transceivers, Wi-Fi transceivers, DECT transceivers, or the like, to protect the wireless signals from eavesdropping by unauthorized persons. For this purpose, secure wireless transceivers usually rely on so-called "shared secrets" that enable the devices participating in a connection to encrypt and decrypt the audio signals. Encryption key data indicating the shared secrets may be used directly as encryption and/or decryption keys, or the encryption key data may be used by the participating devices to compute such encryption and/or decryption keys. In the well-known processes for "pairing" or "bonding" wireless devices, encryption key data are exchanged between two or more participating devices. The term "bonding" is typically used for processes where the shared secrets and/or encryption/decryption keys are remembered for later use in order to speed up later reestablishing of communication. Typically, such shared secrets and/or encryption/decryption keys are written into and retrieved from non-volatile memory in order to maintain the data also when the devices are powered off. In order to maintain security, devices normally exchange encryption key data "out of band", meaning that they do not send the encryption key data over the same wireless audio connection as the encrypted signals.

In order to reduce the need for manual intervention , encryption key data may preferably be transferred between participating devices 15, 16 through the WAN 12 using already established encrypted data communication between the PC's 14. For instance, encryption key data may be generated by the supervisor's headset 16 and transmitted through a wired audio connection to the supervisor's audio controller 15, from there passed on to their PC 14, which encrypts the encryption key data and transmits the encrypted data through the WAN 12 to a call agent's PC 14, which in turn decrypts the encryption key data and transmits the decrypted data to the call agent's audio controller 15. The transmitted encryption key data may then be used by the call agent's audio controller 15 to establish secure wireless communication with the supervisor headset 16. Alternatively, encryption key data may be generated by the call agent's audio controller 15 and transmitted the opposite way to the supervisor's headset 16, which may use the transmitted encryption key data to establish secure wireless communication with the call agent's audio controller 15. Encryption and decryption of the encryption key data may instead, or additionally, be performed by the respective audio controllers 15. Exchanging encryption key data through the WAN 12 may considerably speed up the establishing of secure wireless communication between the supervisor's headset 16 and the call agent's audio controller 15.

The participating devices 15, 16 may instead, or additionally, exchange encryption key data through other out-of-band channels, such as e.g. by means of near-field communication (NFC), optical communication or other short-range wireless communication, that physically restricts the exchange of the encryption key data to devices 15, 16 that are located e.g. within a few centimeters of each other. Such other out-of-band channels may go directly between the supervisor headset 16 and the call agent's audio controller 15, or they may go through the agent's headset 13. The agent's headset 13 may thus receive encryption key data from the supervisor's headset 16, e.g. by means of a short-range wireless receiver, and transmit the received encryption key data to the call agent's audio controller 15 through the wired audio connection 18 or the wireless audio connection 19, or vice versa. A supervisor may thus initiate a supervision session between their headset 16 and a selected agent's audio controller 15 through interaction with the supervisor application program and/or by bringing the supervisor headset 16 close to the selected call agent's audio controller 15 and/or to the selected call agent's headset 13. When a bond has been created between two specific devices 15, 16, meaning that both devices 15, 16 remember the shared secrets and/or encryption/decryption keys for later use, then an exchange of encryption key data can be expensed with in subsequent supervision sessions between those two specific devices 15, 16. In any case, bringing the supervisor headset 16 close to the selected call agent's audio controller 15 and/or the selected call agent's headset 13 may also cause the devices 13, 16 to transmit and/or detect the predefined supervision request.

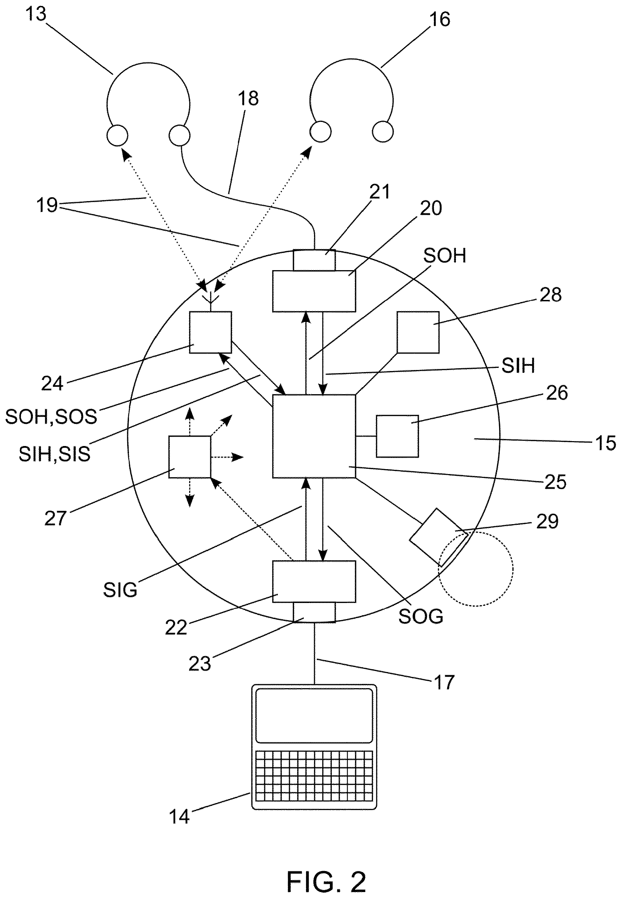

The audio controller 15 shown in FIG. 2 comprises a sound device interface 20 with a sound device connector 21 detachably connectable to a corresponding connector of an external sound interface device 13, a gateway interface 22 with a gateway connector 23 connectable to a corresponding connector of an external audio gateway device 14, a wireless transceiver 24 suitable for wirelessly connecting to an external sound interface device 13, 16, and an audio signal router 25, wherein the term "external" means that the respective device 13, 14, 16 is not comprised by the audio controller 15. The audio controller 15 may further comprise a non-volatile memory 26, a power supply 27, a user interface 28 and/or a short-range wireless receiver 29. Where required for the functioning, the components 20-29 of the audio controller 15 are connected through electronic connections as commonly known in the art.

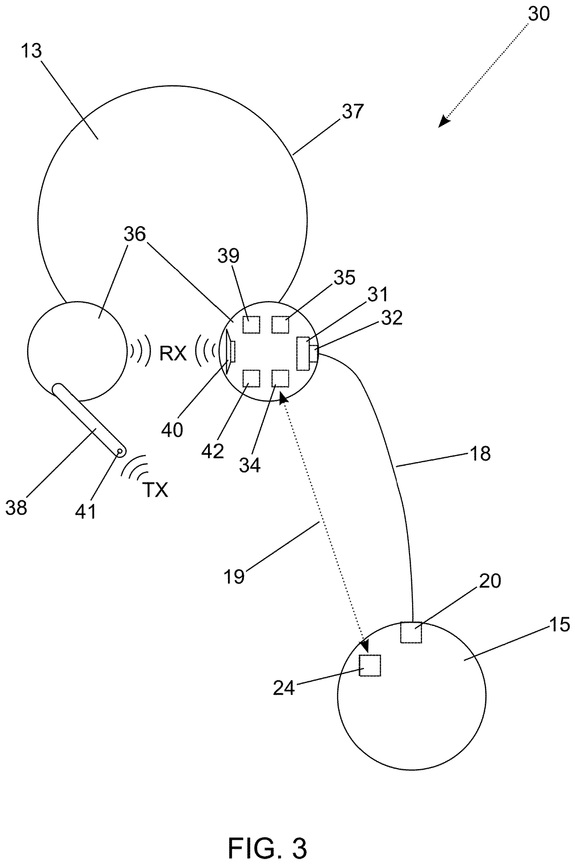

Each of the sound device interface 20, the gateway interface 22 and the wireless transceiver 24 is a bidirectional audio interface and may thus be used for establishing audio communication with an external audio device. The sound device interface 20 is adapted for establishing wired audio communication with an external sound interface device, such as a headset 13, 16, an earphone or a hands-free set. The gateway interface 22 is adapted for establishing wired audio communication with an external audio gateway device, such as a PC 14, a desktop telephone or a mobile phone. The wireless transceiver 24 is adapted for establishing wireless audio communication with an external sound interface device, such as a headset 13, 16, an earphone or a hands-free set. In the following, the functioning of the audio controller 15, as well as of an audio communication system 30 (see FIG. 3) comprising such an audio controller 15, is explained with reference to the example scenario 1 of FIG. 1 and to the audio controller 15 shown in FIG. 2. In the above description of FIGs. 1 and 2 as well as in the following description, the agent headset 13 serves as an example of a sound interface device, the PC 14 serves as an example of an audio gateway device, and the supervisor headset 16 serves as an example of a further sound interface device; any of these examples can be replaced with respective sound interface devices or audio gateway devices of other types.

The detachable sound device connector 21 enables the call agent to mechanically connect and disconnect their agent headset 13 to and from the audio controller 15. The detachable gateway connector 23 may e.g. comprise a cable extending between a housing (not shown) of the audio controller 15 and a connector housing (not shown) that can be mechanically connected directly to a corresponding connector mounted in a housing (not shown) of the PC 14. Any or each of the sound device connector 21 and the gateway connector 23 preferably comprises an electromechanical and/or optomechanical connector, such as e.g. a USB A plug, a USB A receptacle, a USB B plug, a USB B receptacle, a USB C plug, a USB C receptacle, an S/PDIF plug, an S/PDIF receptacle, an audio jack plug, an audio jack receptacle, or the like. Preferably, the sound device connector 21 comprises a receptacle and the gateway connector 23 comprises a plug that is compatible with the receptacle of the sound device connector 21, or vice versa, at least for the purpose of establishing audio communication, such that a call agent can switch between connecting their headset 13 directly to the PC 14 or through the audio controller 15 and still enjoy audio communication through the PC 14 without having to employ adaptors or the like when switching.

The audio signal router 25 controls the establishing of audio communication with external audio devices 13, 14, 16 through the audio interfaces 20, 22, 24 and the routing of audio signals between the audio interfaces 20, 22, 24. In a wired mode of operating the audio controller 15, the agent headset 13 is connected to the sound device connector 21 and the PC 14 is connected to the gateway connector 23. In the wired mode, the audio signal router 25 establishes audio communication with the agent headset 13 through the sound device interface 20 and with the PC 14 through the gateway interface 22. The audio signal router 25 receives a headset audio input signal SIH from the agent headset 13 through the sound device interface 20 and receives a gateway audio input signal SIG from the PC 14 through the gateway interface 22. The audio signal router 25 further transmits a headset audio output signal SOH to the agent headset 13 through the sound device interface 20 and transmits a gateway audio output signal SOG to the PC 14 through the gateway interface 22. The headset audio output signal SOH comprises the gateway audio input signal SIG, such that the call agent can use their headset 13 to listen to speech from a remote party received through the PC 14, and the gateway audio output signal SOG comprises the headset audio input signal SIH, such that speech picked up by a microphone of the agent headset 13 can be transmitted to the remote party through the PC 14. In the wired mode, the audio signal router 25 preferably switches off the wireless transceiver 24 in order to avoid unnecessary occupation of a wireless communication channel.

In a wireless mode of operating the audio controller 15, the audio controller 15 communicates with the PC 14 as described above for the wired mode, while it establishes wireless audio communication with the agent headset 13 through the wireless transceiver 24 instead of communicating audio through the sound device interface 20. In the wireless mode, the audio signal router 25 thus receives the headset audio input signal SIH from the agent headset 13 through the wireless transceiver 24 and transmits the headset audio output signal SOH to the agent headset 13 through the wireless transceiver 24. The headset audio output signal SOH still comprises the gateway audio input signal SIG, and the gateway audio output signal SOG still comprises the headset audio input signal SIH.

In a supervision mode of operating the audio controller 15, the audio signal router 25 maintains operation as described further above for the wired mode and further establishes wireless audio communication with the supervisor headset 16 through the wireless transceiver 24. The audio signal router 25 further transmits a supervisor audio output signal SOS through the wireless transceiver 24 and provides that the supervisor audio output signal SOS comprises the gateway audio input signal SIG, such that also the supervisor can use their headset 16 to listen to speech from the remote party received through the PC 14. The audio signal router 25 may provide that the supervisor audio output signal SOS further comprises the headset audio input signal SIH, such that the supervisor can use their headset 16 to also listen to speech from the call agent. The audio signal router 25 may provide that the headset audio output signal SOH further comprises the supervisor audio input signal SIS, such that the call agent can use their headset 13 to also listen to speech picked up by a microphone of the supervisor headset 16. The audio signal router 25 may further provide that the gateway audio output signal SOG further comprises the supervisor audio input signal SIS, such that also the supervisor's speech can be transmitted to the remote party through the PC 14.

The audio signal router 25 preferably switches the audio controller 15 from the wired mode to the supervision mode in response to detecting a predefined supervision event. The predefined supervision event may comprise receiving a predefined supervision request through the sound device interface 20, the gateway interface 22 or the wireless transceiver 24. As explained further above, the supervisor may trigger their PC 14 to transmit a supervision request through the WAN 12 and the gateway interface 22 by interacting with the telephony application program executing on their PC 14. Alternatively, the supervisor may cause the agent headset 13 to transmit a supervision request to the audio controller 15 through the sound device interface 20 or the wireless transceiver 24 by bringing the supervisor headset 16 close to a short-range wireless receiver comprised by the agent headset 13. Alternatively, the short-range wireless receiver 29 may transmit a supervision request to the audio signal router 25 when it detects an approach of the supervisor headset 16. The predefined supervision event may thus alternatively, or additionally, comprise the audio signal router 25 receiving a predefined supervision request from the short-range wireless receiver 29. In other embodiments, the short-range wireless receiver 29 may be omitted.

In some embodiments, the call agent may be required to accept a received supervision request as a prerequisite for switching from the wired mode to the supervision mode. When receiving a supervision request, the audio signal router 25 may thus control the user interface 28 to indicate the supervision request to the call agent. The call agent may then, in response to noticing the supervision request indication, execute a predefined supervision action that indicates an accept of the supervision request to the audio controller 15. The predefined supervision event may thus alternatively, or additionally, comprise detecting a predefined supervision action by a user through the user interface 28. The user interface 28 may e.g. comprise a user-operable control (not shown) and/or a status indicator (not shown). The status indicator may e.g. comprise a light that indicates the supervision request by lighting up and/or by flashing, a vibrator that indicates the supervision request by mechanically exciting a part of the audio controller 15 and/or its housing, and/or a display that indicates the supervision request by showing a message, an icon or the like. The user-operable control may comprise e.g. a mechanical control, a touch sensor, a proximity sensor or a touch screen that is able to detect the predefined supervision action. In other embodiments, the user interface 28, the status indicator and/or the user-operable control may be omitted. In some embodiments, the audio signal router 25 may transmit an indication of the supervision request to the agent headset 13 as an audio signal and embedded into the headset audio output signal SOH, such that the agent headset 13 can provide a corresponding indication sound to the call agent.

When the call agent is engaged in an audio conversation through the wireless connection 19, i.e. the audio controller 15 is in the wireless mode, then the wireless transceiver 24 is occupied, and the audio controller 15 may therefore not be able to immediately switch to the supervision mode without interrupting the audio conversation. To enable a switch to the supervision mode, the audio signal router 25 of the present invention thus, in response to detecting the predefined supervision event, first switches the audio controller 15 to the wired mode and subsequently switches it to the supervision mode. In some embodiments, the audio signal router 25 may delay switching to the supervision mode until it determines that the agent headset 13 has been connected through the sound device interface 20. The audio signal router 25 may make that determination e.g. by receiving a status signal from the sound device connector 21, by receiving handshake signals through the sound device interface 20 and/or by determining that the sound device audio input signal SIH is received through the sound device interface 20. The audio signal router 25 may thus preferably restrict switching to the supervision mode to time periods wherein the audio controller 15 is in the wired mode, i.e. wherein audio communication is established with the agent headset 13 through the sound device interface 20.

In order to speed up responding to supervision events, and further to release wireless communication channel(s) for use by others, the audio signal router 25 may preferably switch the audio controller 15 from the wireless mode to the wired mode, and further switch off wireless transmission through the wireless transceiver 24, when it detects that the agent headset 13 has been connected through the sound device interface 20 and/or when it determines that the call agent intends to switch mode. The audio signal router 25 may e.g. determine the call agent's intent to switch to wired mode when it receives a predefined connection request through the sound device interface 20 or through the gateway interface 22 from respectively the agent headset 13 and the PC 14. The call agent may e.g. cause the agent headset 13 or the PC 14 to transmit the connection request by interacting with a user interface (39, see FIG. 3) of the respective audio device 13, 14. Alternatively, the call agent may interact with the user interface 28 to signal their intent to switch mode. The audio signal router 25 may thus, in response to detecting the predefined supervision event as described further above and/or a predefined connection event, and within - or at the beginning of - a time period wherein audio communication is established with the agent headset 13 through the sound device interface 20, terminate wireless audio communication with the agent headset 13 through the first wireless transceiver 24. The predefined connection event may comprise the audio signal router 25 detecting a connecting of the sound device connector 21, the audio signal router 25 receiving a predefined connection request through the sound device interface 20 or the gateway interface 22, and/or the audio signal router 25 detecting a predefined connection action by a user through the user interface 28. The audio signal router 25 may detect a connecting of the sound device connector 21 in the same way as described above for determining that the agent headset 13 has been connected through the sound device interface 20.

In order to enable the call agent to move away from their PC 14, the audio signal router 25 may preferably switch the audio controller 15 from the wired mode to the wireless mode when it detects that the agent headset 13 has been disconnected from the sound device interface 20 and/or when it determines that the call agent intends to switch mode. The audio signal router 25 may e.g. determine the call agent's intent to switch to wireless mode when it receives a predefined disconnection request through the sound device interface 20 or through the gateway interface 22 from respectively the agent headset 13 and the PC 14. The call agent may e.g. cause the agent headset 13 or the PC 14 to transmit the disconnection request by interacting with a user interface of the respective audio device 13, 14. Alternatively, the call agent may interact with the user interface 28 to signal their intent to switch mode. The audio signal router 25 may thus, in response to detecting a predefined disconnection event, establish wireless audio communication with the agent headset 13 through the first wireless transceiver 24. The predefined disconnection event may comprise the audio signal router 25 detecting a disconnecting of the sound device connector 21, the audio signal router 25 receiving a predefined disconnection request through the sound device interface 20 or the gateway interface 22, and/or the audio signal router 25 detecting a predefined disconnection action by a user through the user interface 28. The audio signal router 25 may detect a disconnecting of the sound device connector 21 e.g. by receiving a status signal from the sound device connector 21, by ceasing to receive handshake signals through the sound device interface 20 and/or by determining that the sound device audio input signal SIH is no longer received through the sound device interface 20.

In some embodiments, the audio controller 15 may, when switching to the supervisor mode, establish wireless audio communication with a sound interface device 13, 16 through the wireless transceiver 24 without attempting to determine whether that sound interface device 13, 16 differ from the sound interface device 13 connected through the sound device interface 20. Such embodiments may require the call agents and/or supervisors to exercise more care when triggering the switch to the supervision mode. In other embodiments, the audio controller 15 may instead establish wireless audio communication with a sound interface device 16 only if it differs from the sound interface device 13 connected through the sound device interface 20. The audio signal router 25 may thus receive through the sound device interface 20 first identity data indicating an identity of the first sound interface device 13, receive through the first wireless transceiver 24 second identity data indicating an identity of the second sound interface device 16, compare the identities indicated by the first and the second identity data, and establish wireless audio communication with the second sound interface device 16 in dependence on the compared identities differing from each other. This may enable the audio controller 15 to avoid accidentally establishing, or attempting to establish, both a wired and a wireless audio communication with e.g. the agent headset 13. The identity data may e.g. comprise a device serial number, a MAC address for a wireless transceiver of a device, or the like.

The wireless transceiver 24 preferably comprises a secure wireless transceiver adapted to transmit and receive encrypted audio signals, such as e.g. a Bluetooth transceiver, a Wi-Fi transceiver, a DECT transceiver, or the like, and the wireless transceiver 24 preferably utilizes encryption key data to establish encrypted wireless audio communication with a connected sound interface device 13, 16. The audio signal router 25 may preferably receive encryption key data through the sound device interface 20 and/or the gateway interface 22 and provide the received encryption key data to the wireless transceiver 24 to enable the wireless transceiver 24 to establish the encrypted wireless audio communication. Alternatively, or additionally, the audio signal router 25 and/or the wireless transceiver 24 may generate encryption key data and/or retrieve encryption key data from the non-volatile memory 26 and transmit the generated and/or retrieved encryption key data through the sound device interface 20 and/or the gateway interface 22 to enable a connected sound interface device 13, 16 to establish encrypted wireless audio communication with the audio controller 15 through the first wireless transceiver 24. The encryption key data may e.g. be written to the non-volatile memory 26 during manufacturing of the audio controller 15 or during a setup procedure performed after manufacturing. In general, encryption key data comprise information required by devices 13, 15, 16 for establishing encrypted wireless audio communication with each other.

The audio controller 15 preferably comprises a power supply 27 that receives electric power through the gateway connector 23 from the PC 14 and supplies electric power to the sound device interface 20, the gateway interface 22, the wireless transceiver 24, the audio signal router 25, the non-volatile memory 26, the user interface 28 and/or the short-range wireless receiver 29. The power supply 27 may further supply electric power through the sound device connector 21 to a connected sound interface device 13.

In embodiments wherein the sound device connector 21 conforms with the USB-C standard, the so-called "Audio Adapter Accessory Mode" may be used to exchange analog audio signals with a connected sound interface device 13, 16 through the sound device interface 20. According to the standard, in this mode, all digital circuits shall be disconnected from the connector, and certain pins be reassigned for analog outputs or inputs. Those certain pins in the sound device connector 21 can then be used by the audio controller 15 to respectively transmit the headset audio output signal SOH and receive the headset audio input signal SIH in analog form. The audio signal router 25 may preferably be able to switch between analog and digital audio signal exchange through the sound device interface 20. When detecting a connecting of a sound interface device 13, 16 through the sound device interface 20, e.g. as described further above, the audio signal router 25 may in some embodiments, initially assume that the connected sound interface device 13, 16 is able to exchange analog audio signals and thus initially control the sound device interface 20 to operate in an analog mode. Upon subsequently determining a failure to receive the headset audio input signal SIH in analog form, the audio signal router 25 may switch the sound device interface 20 to operate in a digital mode. This may enable the audio controller 15 to establish audio communication with both analog and digital sound interface devices 13, 16. In some embodiments, the audio signal router 25 may determine which of analog mode or digital mode to use in dependence on information received from the digital sound interface device 13 through the wireless transceiver 24. In embodiments wherein also the gateway connector 23 conforms with a USB standard, a digital gateway audio input signal SIG received from the PC 14 through the gateway interface 22 may be passed on unaltered to the sound device interface 20 for transmission to a digital sound interface device 13, 16 and/or, for transmission to an analog sound interface device 13, 16, the digital gateway audio input signal SIG may be converted by a digital/analog converter (DAC) (not shown). Similarly, a digital headset audio input signal SIH received through the sound device interface 20 may be passed on unaltered to the gateway interface 22 for transmission to the PC 14 and/or an analog headset audio input signal SIH may be converted by an analog/digital converter (ADC) (not shown) for transmission to the PC 14. USB control signals may also be passed on in both directions between the sound device connector 21 and the gateway connector 23. In such embodiments, a USB Host controller in the audio controller 15 may be omitted to e.g. reduce production costs.

The audio signal router 25 may preferably be able to detect further predefined user actions for e.g. initiating, accepting, rejecting or terminating audio communication calls, adjusting sound volume, or the like through the user interface 28. Correspondingly, the audio signal router 25 may respond to detecting such user actions by transmitting corresponding control commands to the headset 13 through the headset interface 20 or the wireless transceiver 24, or to the PC 14 through the gateway interface 22, or by altering an amplitude of the headset audio output signal SOH. In embodiments of the audio controller 15 that comprise a USB Host controller and wherein the sound device connector 21 conforms with the USB standard, the audio signal router 25 may transmit such control commands as digital commands through the headset interface 20. In embodiments of the audio controller 15 wherein the gateway connector 23 conforms with the USB standard, the audio signal router 25 may transmit such control commands as digital commands through the gateway interface 22. In embodiments wherein the audio signal router 25 is able to exchange analog audio signals with a connected sound interface device 13, 16 through the sound device interface 20, the audio signal router 25 may transmit such control commands encoded as audio signals embedded into the headset audio output signal SOH and/or into the headset audio input signal SIH. In such embodiments, the audio signal router 25 may respond to detecting predefined user actions for adjusting sound volume by altering the amplitude of the headset audio output signal SOH and/or the headset audio input signal SIH.

The audio communication system 30 shown in FIG. 3 comprises an agent headset 13 and an audio controller 15. The agent headset 13 comprises a headset interface 31 with a headset audio connector 32 for detachably connecting to the audio controller 15, a secure wireless transceiver 34 for wirelessly connecting to the audio controller 15, a headset controller 35, two earphones 36 mechanically connected by a headband 37 and each comprising a sound transmitter 40, such as e.g. a speaker driver, a microphone arm 38 mechanically attached to the headband 37 or one of the earphones 36 and comprising a sound receiver 41, such as e.g. a microphone, and a user interface 39. The headset controller 35 may further comprise a non-volatile memory 42. The audio controller 15 is an audio controller 15 as described above in an embodiment comprising a secure wireless transceiver 24 that transmits and receives encrypted audio signals, and wherein the audio controller 15 is configured to exchange encryption key data through its sound device interface 20 and/or its gateway interface 22, as also described further above. Where required for the functioning, the components 31-42 of the agent headset 13 are connected through electronic connections as commonly known in the art. Such connections may go through the earphones 36, the headband 37 and/or the microphone arm 38.

In a wired mode of operating the audio communication system 30, a call agent may connect the headset audio connector 32 to the sound device connector 21 of the audio controller 15, to have the two audio devices 13, 15 establish audio communication through a wired audio connection 18, with the audio controller 15 thus also operating in its wired mode. In an alternative wireless mode of operating the audio communication system 30, the call agent may have the two audio devices 13, 15 establish wireless audio communication through a wireless audio connection 19 involving the secure wireless transceivers 34, 24 of the two audio devices, with the audio controller 15 thus also operating in its wireless mode. In each of the wired mode and the wireless mode, the two audio devices 13, 15 may exchange audio signals as described further above. The agent headset 13 may pick up the call agent's voice sound through its sound receiver 41, convert the sound into a TX audio signal and transmit the TX audio signal to the audio controller 15, which receives the TX audio signal as the headset audio input signal SIH. The audio controller 15 in turn transmits the headset audio output signal SOH to the agent headset 13, which receives the signal as an RX audio signal and provides a corresponding RX sound through the sound transmitters 40 of the earphones in order for the call agent to hear the RX sound. The audio controller 15 may provide the RX sound as e.g. mono sound from both earphones 36, mono sound from one or the other of the earphones 36 or stereo sound from both earphones 36.

In some embodiments, the headset controller 35 and/or the wireless transceiver 34 of the agent headset 13 may generate encryption key data and/or retrieve encryption key data from the non-volatile memory 42. In the wired mode of operating the audio communication system 30, the headset controller 35 may transmit the generated and/or retrieved encryption key data through the headset interface 31 to the audio controller 15. The audio controller 15 may subsequently utilize the received encryption key data to establish wireless audio communication with the agent headset 13. The audio controller 15 may further write the received encryption key data to the non-volatile memory 26 and later retrieve the written encryption key data from the non-volatile memory 26 and utilize them to establish wireless audio communication with the agent headset 13. This may enable the audio controller 15 to quickly switch the audio communication system 30 to the wireless mode as described further above.

In some embodiments, the audio controller 15 may generate or retrieve encryption key data as described further above. In the wired mode of operating the audio communication system 30, the audio controller 15 may transmit the generated and/or retrieved encryption key data through the sound device interface 20 to the agent headset 13. The headset controller 35 may receive the encryption key data from the audio controller 15 through the headset interface 31 and provide the received encryption key data to the wireless transceiver 34, and the wireless transceiver 34 may utilize the received encryption key data to establish encrypted wireless audio communication with the audio controller 15. The headset controller 35 may further write the received encryption key data to the non-volatile memory 42 and later retrieve the written encryption key data from the non-volatile memory 42 and utilize them to establish wireless audio communication with the audio controller 15. This may aid the audio controller 15 in quickly switching the audio communication system 30 to the wireless mode as described further above. In some embodiments, the audio communication system 30 may further comprise a gateway device 14.

Each, or any, of the agent headset 13 and the supervisor headset 16 may be embodied as a binaural headset with an earphone 36 for placement on, at or in each of the user's ears. Other embodiments may comprise only a single earphone 36 for one of the user's ears. The headsets 13, 16 may further comprise various combinations of components known in the art, such as e.g. headbands 37, ear hooks, eargels, ear cushions, active noise cancelling circuits, noise suppressors, multiple microphones 41, beamformers, and the like. In some embodiments, the headband 37 may be omitted. In some embodiments, the microphone arm 38 may be omitted and the sound receiver(s) 41 instead arranged at one or more of the earphones 36.

Functional blocks of digital circuits, such as e.g. audio signal routers 25, USB Host controllers and/or headset controllers 35, may be implemented in hardware, firmware or software, or any combination hereof. Digital circuits may perform the functions of multiple functional blocks in parallel and/or in interleaved sequence, and functional blocks may be distributed in any suitable way among multiple hardware components, such as e.g. dedicated signal processors, microcontrollers and other integrated circuits.

The detailed description given herein and the specific examples indicating preferred embodiments of the invention are intended to enable a person skilled in the art to practice the invention and should thus be regarded mainly as an illustration of the invention. The person skilled in the art will be able to readily contemplate further applications of the present invention as well as advantageous changes and modifications from this description without deviating from the scope of the invention, as defined in the appended claims. Any such changes or modifications mentioned herein are meant to be non-limiting for the scope of the invention.

The invention is not limited to the embodiments disclosed herein, and the invention may be embodied in other ways within the subject-matter defined in the following claims. As an example, further features of the described embodiments may be combined arbitrarily, e.g. in order to adapt devices according to the invention to specific requirements.

Any reference numerals and labels in the claims are intended to be non-limiting for the scope of the claims.

## Claims

1. An audio controller (15) comprising a sound device interface (20) with a sound device connector (21), a gateway interface (22) with a gateway connector (23), a first wireless transceiver (24) and an audio signal router (25),
wherein the audio signal router (25) is adapted to:
- through the sound device interface (20), establish audio communication with a first sound interface device (13) detachably connected to the sound device connector (21) and receive a sound device audio input signal (SIH);
- through the gateway interface (22), establish audio communication with an audio gateway device (14) detachably connected to the gateway connector (23) and receive a gateway audio input signal (SIG);
- transmit a sound device audio output signal (SOH) comprising the gateway audio input signal (SIG) through the sound device interface (20);
- transmit a gateway audio output signal (SOG) comprising the sound device audio input signal (SIH) through the gateway interface (22);
- in response to detecting a predefined supervision event, and within a time period wherein audio communication is established with the first sound interface device (13) through the sound device interface (20), establish wireless audio communication with a second sound interface device (16) through the first wireless transceiver (24) and transmit a supervisor audio output signal (SOS) comprising the gateway audio input signal (SIG) through the first wireless transceiver (24);
wherein further:
- in a wired mode of operating the audio controller (15), the audio signal router (25) is adapted to establish audio communication with the first sound interface device (13) through the sound device interface (20) and with the audio gateway device (14) through the gateway interface (22);
- in a wireless mode of operating the audio controller (15), the audio controller (15) is adapted to communicate with the audio gateway device (14) as in wired mode, and to establish wireless audio communication with the first sound interface device (13) through the first wireless transceiver (24) instead of communicating audio through the sound device interface (20); and
- in a supervision mode of operating the audio controller (15), the audio signal router (25) is adapted to maintain operation as in the wired mode and further establish wireless audio communication with the second sound interface device (16) through the wireless transceiver (24),
**characterized in that**
when the audio controller (15) is in the wireless mode, the audio signal router (25) is adapted to, in response to detecting the predefined supervision event, first switch the audio controller (15) to the wired mode and subsequently switch the audio controller (15) to the supervision mode.

2. An audio controller according to claim 1, wherein further at least one of:
- the predefined supervision event comprises the audio signal router (25) receiving a predefined supervision request through the sound device interface (20), the gateway interface (22) or the first wireless transceiver (24);
- the audio controller further comprises a short-range wireless receiver (29) adapted to transmit a predefined supervision request to the audio signal router (25) in response to detecting an approach of the second sound interface device (16), and the predefined supervision event comprises the audio signal router (25) receiving the predefined supervision request from the short-range wireless receiver (29);
and
- the predefined supervision event comprises the audio signal router (25) detecting a predefined supervision action by a user through a user interface (28) comprised by the audio controller.

3. An audio controller according to claim 1 or 2, wherein the audio signal router (25) further is adapted to establish wireless audio communication with the first sound interface device (13) through the first wireless transceiver (24) in response to detecting a predefined disconnection event,
and wherein further at least one of:
- the predefined disconnection event comprises the audio signal router (25) detecting a disconnecting of the sound device connector (21);
- the predefined disconnection event comprises the audio signal router (25) receiving a predefined disconnection request through the sound device interface (20), the gateway interface (22) or the first wireless transceiver (24);
and
- the predefined disconnection event comprises the audio signal router (25) detecting a predefined disconnection action by a user through a user interface (28) comprised by the audio controller.

4. An audio controller according to any preceding claim, wherein the audio signal router (25) further is adapted to, in response to detecting the predefined supervision event or a predefined connection event, and within - or at the beginning of - a time period wherein audio communication is established with the first sound interface device (13) through the sound device interface (20), terminate wireless audio communication with the first sound interface device (13) through the first wireless transceiver (24),
and wherein further at least one of:
- the predefined connection event comprises the audio signal router (25) detecting a connecting of the sound device connector (21);
- the predefined connection event comprises the audio signal router (25) receiving a predefined connection request through the sound device interface (20), the gateway interface (22) or the first wireless transceiver (24);
and
- the predefined connection event comprises the audio signal router (25) detecting a predefined connection action by a user through a user interface (28) comprised by the audio controller.

5. An audio controller according to any preceding claim, wherein the audio signal router (25) further is adapted to:
- receive through the sound device interface (20) first identity data indicating an identity of the first sound interface device (13);
- receive through the first wireless transceiver (24) second identity data indicating an identity of the second sound interface device (16);
- comparing the identities indicated by the first and the second identity data; and
- establish wireless audio communication with the second sound interface device (16) in dependence on the compared identities differing from each other.

6. An audio controller according to any preceding claim, wherein further, in a time period wherein wireless audio communication is established with the second sound interface device (16), the audio signal router (25) further is adapted to provide that at least one of:
- the supervisor audio output signal (SOS) further comprises the sound device audio input signal (SIH);
- the sound device audio output signal (SOH) further comprises a supervisor audio input signal (SIS) received through the first wireless transceiver (24);
and
- the gateway audio output signal (SOG) further comprises a supervisor audio input signal (SIS) received through the first wireless transceiver (24).

7. An audio controller according to any preceding claim, and further comprising a power supply (27) adapted to receive electric power through the gateway connector (23) from a connected external audio gateway device (14) and to supply electric power to the first wireless transceiver (24) and the audio signal router (25).

8. An audio controller according to claim 7, wherein the power supply (27) further is adapted to supply electric power through the sound device connector (21) to a connected external sound interface device (13).

9. An audio controller according to any preceding claim, wherein each or any one of the sound device connector (21) and the gateway connector (23) comprises an electromechanical connector and/or optomechanical connector, such as e.g. a USB A plug, a USB A receptacle, a USB B plug, a USB B receptacle, a USB C plug, a USB C receptacle, an S/PDIF plug, an S/PDIF receptacle, an audio jack plug, an audio jack receptacle, or the like.

10. An audio controller according to claim 9, wherein the sound device connector (21) comprises a receptacle and the gateway connector (23) comprises a plug that is compatible with the receptacle of the sound device connector (21), or vice versa, wherein compatibility is provided at least for the establishing of audio communication.

11. An audio controller according to any preceding claim, wherein the first wireless transceiver (24) comprises a secure wireless transceiver adapted to transmit and receive encrypted audio signals, such as a Bluetooth transceiver, a Wi-Fi transceiver, a DECT transceiver, or the like.

12. An audio controller according to claim 11, wherein the audio signal router (25) further is adapted to receive first encryption key data through the sound device interface (20) and/or the gateway interface (22) and to provide the first encryption key data to the first wireless transceiver (24), and wherein the first wireless transceiver (24) further is adapted to utilize the first encryption key data to establish encrypted wireless audio communication with the first and/or the second sound interface device (13, 16).

13. An audio controller according to claim 11 or 12, wherein the audio signal router (25) and/or the first wireless transceiver (24) further is adapted to generate second encryption key data and/or retrieve second encryption key data from a non-volatile memory (26) comprised by the audio controller (15), wherein the audio signal router (25) further is adapted to transmit the generated and/or retrieved second encryption key data through the sound device interface (20) and/or the gateway interface (22), and wherein the second encryption key data comprise information required by the first and/or the second sound interface device (13, 16) for establishing of encrypted wireless audio communication with the audio controller (15) through the first wireless transceiver (24).

14. An audio communication system (30) comprising a first sound interface device (13) and an audio controller (15), wherein the first sound interface device (13) comprises:
- a controller interface (31) with a controller connector (32) detachably connectable to the sound device connector (21) of the audio controller (15);
- a second wireless transceiver (34) wirelessly connectable to the first wireless transceiver (24) of the audio controller (15);
- a sound device controller (35);
- a sound transmitter (40); and
- a sound receiver (41),
wherein the first sound interface device (13) is adapted to transmit the sound device audio input signal (SIH) to the audio controller (15), based on a user's voice sound picked up through the sound receiver (41), and further is adapted to receive the sound device audio output signal (SOH) from the audio controller (15) and provide a corresponding output sound through the sound transmitter (40),
and wherein further at least one of:
- the audio controller (15) comprises an audio controller according to claim 12, the sound device controller (35) and/or the second wireless transceiver (34) is adapted to generate the first encryption key data and/or retrieve the first encryption key data from a non-volatile memory (42) comprised by the first sound interface device (13), and the sound device controller (35) is adapted to transmit the generated and/or retrieved first encryption key data through the controller interface (31) to the audio controller (15);
and
- the audio controller (15) comprises an audio controller according to claim 13, the sound device controller (35) is adapted to receive the second encryption key data from the audio controller (15) through the controller interface (31) and to provide the second encryption key data to the second wireless transceiver (34), and the second wireless transceiver (34) is adapted to utilize the second encryption key data to establish encrypted wireless audio communication with the audio controller (15).

## Patentansprüche

1. Audiosteuerung (15), umfassend eine Tongeräte-Schnittstelle (20) mit einem Tongeräte-Steckverbinder (21), eine Gateway-Schnittstelle (22) mit einem Gateway-Steckverbinder (23), einen ersten drahtlosen Transceiver (24) und einen Audiosignalrouter (25),
wobei der Audiosignalrouter (25) dazu eingerichtet ist:
- über die Tongeräte-Schnittstelle (20), Audiokommunikation mit einem ersten Tonschnittstellengerät (13), das trennbar mit dem Tongeräte-Steckverbinder (21) verbunden ist, herzustellen und ein Tongeräte-Audioeingangssignal (SIH) zu empfangen;
- über die Gateway-Schnittstelle (22), Audiokommunikation mit einem Audio-Gateway-Gerät (14), das trennbar mit dem Gateway-Steckverbinder (23) verbunden ist, herzustellen und ein Gateway-Audioeingangssignal (SIG) zu empfangen;
- ein Tongeräte-Audioausgangssignal (SOH), welches das Gateway-Audioeingangssignal (SIG) umfasst, über die Tongeräte-Schnittstelle (20) zu senden;
- ein Gateway-Audioausgangssignal (SOG), welches das Tongeräte-Audioeingangssignal (SIH) umfasst, über die Gateway-Schnittstelle (22) zu senden;
- als Reaktion auf das Detektieren eines vordefinierten Aufsichtsereignisses, und innerhalb eines Zeitraums, in dem Audiokommunikation mit dem ersten Tonschnittstellengerät (13) über die Tongeräte-Schnittstelle (20) hergestellt ist, drahtlose Audiokommunikation mit einem zweiten Tonschnittstellengerät (16) über den ersten drahtlosen Transceiver (24) herzustellen und ein Aufseher-Audioausgangssignal (SOS), welches das Gateway-Audioeingangssignal (SIG) umfasst, über den ersten drahtlosen Transceiver (24) zu senden;
wobei ferner:
- in einem drahtgebundenen Modus des Betriebs der Audiosteuerung (15) der Audiosignalrouter (25) dazu eingerichtet ist, Audiokommunikation mit dem ersten Tonschnittstellengerät (13) über die Tongeräte-Schnittstelle (20) und mit dem Audio-Gateway-Gerät (14) über die Gateway-Schnittstelle (22) herzustellen;
- in einem drahtlosen Modus des Betriebs der Audiosteuerung (15) die Audiosteuerung (15) dazu eingerichtet ist, mit dem Audio-Gateway-Gerät (14) wie in dem drahtgebundenen Modus zu kommunizieren, und drahtlose Audiokommunikation mit dem ersten Tonschnittstellengerät (13) über den ersten drahtlosen Transceiver (24) herzustellen statt Audio über die Tongeräte-Schnittstelle (20) zu kommunizieren; und
- in einem Aufsichts-Modus des Betriebs der Audiosteuerung (15) der Audiosignalrouter (25) dazu eingerichtet ist, den Betrieb wie in dem drahtgebundenen Modus zu bewahren und ferner drahtlose Audiokommunikation mit dem zweiten Tonschnittstellengerät (16) über den drahtlosen Transceiver (24) herzustellen,
**dadurch gekennzeichnet, dass** wenn sich die Audiosteuerung (15) in dem drahtlosen Modus befindet, der Audiosignalrouter (25) dazu eingerichtet ist, als Reaktion auf das Detektieren des vordefinierten Aufsichtsereignisses zuerst die Audiosteuerung (15) in den drahtgebundenen Modus zu schalten und anschließend die Audiosteuerung (15) in den Aufsichtsmodus zu schalten.

2. Audiosteuerung nach Anspruch 1, wobei ferner mindestens eines gilt von:
- das vordefinierte Aufsichtsereignis umfasst das Empfangen durch den Audiosignalrouter (25) einer vordefinierten Aufsichtsanfrage über die Tongeräte-Schnittstelle (20), die Gateway-Schnittstelle (22) oder den ersten drahtlosen Transceiver (24);
- die Audiosteuerung umfasst ferner einen drahtlosen Kurzstreckenempfänger (29), der dazu eingerichtet ist, eine vordefinierte Aufsichtsanfrage an den Audiosignalrouter (25) als Reaktion auf das Detektieren einer Annäherung des zweiten Tonschnittstellengeräts (16) zu senden, und das vordefinierte Aufsichtsereignis umfasst das Empfangen durch den Audiosignalrouter (25) der vordefinierten Aufsichtsanfrage von dem drahtlosen Kurzstreckenempfänger (29);
und
- das vordefinierte Aufsichtsereignis umfasst das Detektieren durch den Audiosignalrouter (25) einer vordefinierten Aufsichtsaktion durch einen Benutzer über eine Benutzerschnittstelle (28), die in der Audiosteuerung enthalten ist.

3. Audiosteuerung nach Anspruch 1 oder 2, wobei der Audiosignalrouter (25) ferner dazu eingerichtet ist, drahtlose Audiokommunikation mit dem ersten Tonschnittstellengerät (13) über den ersten drahtlosen Transceiver (24) als Reaktion auf das Detektieren eines vordefinierten Trennereignisses herzustellen,
und wobei ferner mindestens eines gilt von:
- das vordefinierte Trennereignis umfasst das Detektieren durch den Audiosignalrouter (25) einer Trennung des Tongeräte-Steckverbinders (21);
- das vordefinierte Trennereignis umfasst das Empfangen durch den Audiosignalrouter (25) einer vordefinierte Trennungsanfrage über die Tongeräte-Schnittstelle (20), die Gateway-Schnittstelle (22) oder den ersten drahtlosen Transceiver (24);
und
- das vordefinierte Trennereignis umfasst das Detektieren durch den Audiosignalrouter (25) einer vordefinierten Trennaktion durch einen Benutzer über eine Benutzerschnittstelle (28), die in der Audiosteuerung enthalten ist.

4. Audiosteuerung nach einem der vorhergehenden Ansprüche, wobei der Audiosignalrouter (25) ferner dazu eingerichtet ist, als Reaktion auf das Detektieren des vordefinierten Aufsichtsereignisses oder eines vordefinierten Verbindungsereignisses, und innerhalb - oder zu Beginn - eines Zeitraums, in dem Audiokommunikation mit dem ersten Tonschnittstellengerät (13) über die Tongeräte-Schnittstelle (20) hergestellt ist, die drahtlose Audiokommunikation mit dem ersten Tonschnittstellengerät (13) über den ersten drahtlosen Transceiver (24) zu beenden,
und wobei ferner mindestens eines gilt von:
- das vordefinierte Verbindungsereignis umfasst das Detektieren durch den Audiosignalrouter (25) einer Verbindung des Tongeräte-Steckverbinders (21);
- das vordefinierte Verbindungsereignis umfasst das Empfangen durch den Audiosignalrouter (25) einer vordefinierten Verbindungsanfrage über die Tongeräte-Schnittstelle (20), die Gateway-Schnittstelle (22) oder den ersten drahtlosen Transceiver (24);
und
- das vordefinierte Verbindungsereignis umfasst das Detektieren durch den Audiosignalrouter (25) einer vordefinierten Verbindungsaktion durch einen Benutzer über eine Benutzerschnittstelle (28), die in der Audiosteuerung enthalten ist.

5. Audiosteuerung nach einem der vorhergehenden Ansprüche, wobei der Audiosignalrouter (25) ferner dazu eingerichtet ist:
- über die Tongeräte-Schnittstelle (20) erste Identitätsdaten, die eine Identität des ersten Tonschnittstellengeräts (13) angeben, zu empfangen;
- über den ersten drahtlosen Transceiver (24) zweite Identitätsdaten, die eine Identität des zweiten Tonschnittstellengeräts (16) angeben, zu empfangen;
- die Identitäten, die durch die ersten und die zweiten Identitätsdaten angegeben werden, zu vergleichen; und
- drahtlose Audiokommunikation mit dem zweiten Tonschnittstellengerät (16) herzustellen in Abhängigkeit davon, dass die verglichenen Identitäten sich voneinander unterscheiden.

6. Audiosteuerung nach einem der vorhergehenden Ansprüche, wobei ferner in einem Zeitraum, in dem drahtlose Audiokommunikation mit dem zweiten Tonschnittstellengerät (16) hergestellt ist, der Audiosignalrouter (25) ferner dazu eingerichtet ist dafür zu sorgen, dass mindestens eines gilt von:
- das Aufseher-Audioausgangssignal (SOS) umfasst ferner das Tongeräte-Audioeingangssignal (SIH);
- das Tongeräte-Audioausgangssignal (SOH) umfasst ferner ein Aufseher-Audioeingangssignal (SIS) empfangen über den ersten drahtlosen Transceiver (24);
und
- das Gateway-Audioausgangssignal (SOG) umfasst ferner ein Aufseher-Audioeingangssignal (SIS) empfangen über den ersten drahtlosen Transceiver (24).

7. Audiosteuerung nach einem der vorhergehenden Ansprüche und ferner umfassend eine Energieversorgung (27), die dazu eingerichtet ist, elektrische Energie über den Gateway-Steckverbinder (23) von einem verbundenen externen Audio-Gateway-Gerät (14) zu empfangen und den ersten drahtlosen Transceiver (24) und den Audiosignalrouter (25) mit elektrischer Energie zu versorgen.

8. Audiosteuerung nach Anspruch 7, wobei die Energieversorgung (27) ferner dazu eingerichtet ist, über den Tongeräte-Steckverbinder (21) ein verbundenes externes Tonschnittstellengerät (13) mit elektrischer Energie zu versorgen.

9. Audiosteuerung nach einem der vorhergehenden Ansprüche, wobei jeder oder einer von dem Tongeräte-Steckverbinder (21) und dem Gateway-Steckverbinder (23) einen elektromechanischen Steckverbinder und/oder einen fotomechanischen Steckverbinder, wie beispielsweise einen USB-A-Stecker, eine USB-A-Buchse, einen USB-B-Stecker, eine USB-B-Buchse, einen USB-C-Stecker, eine USB-C-Buchse, einen S/PDIF-Stecker, eine S/PDIF-Buchse, einen Audioanschlussstecker, eine Audioanschlussbuchse oder dergleichen, umfasst.

10. Audiosteuerung nach Anspruch 9, wobei der Tongeräte-Steckverbinder (21) eine Buchse umfasst und der Gateway-Steckverbinder (23) einen Stecker umfasst, der mit der Buchse des Tongeräte-Steckverbinders (21) kompatibel ist, oder umgekehrt, wobei die Kompatibilität mindestens für das Herstellen einer Audiokommunikation gegeben ist.

11. Audiosteuerung nach einem der vorhergehenden Ansprüche, wobei der erste drahtlose Transceiver (24) einen sicheren drahtlosen Transceiver, der dazu eingerichtet ist, verschlüsselte Audiosignale zu senden und zu empfangen, wie etwa einen Bluetooth-Transceiver, einen WiFi-Transceiver, einen DECT-Transceiver oder dergleichen, umfasst.

12. Audiosteuerung nach Anspruch 11, wobei der Audiosignalrouter (25) ferner dazu eingerichtet ist, erste Verschlüsselungsschlüsseldaten über die Tongeräte-Schnittstelle (20) und/oder die Gateway-Schnittstelle (22) zu empfangen und die ersten Verschlüsselungsschlüsseldaten dem ersten drahtlosen Transceiver (24) bereitzustellen, und wobei der erste drahtlose Transceiver (24) ferner dazu eingerichtet ist, die ersten Verschlüsselungsschlüsseldaten zu verwenden, um eine verschlüsselte drahtlose Audiokommunikation mit dem ersten und/oder dem zweiten Tonschnittstellengerät (13, 16) herzustellen.

13. Audiosteuerung nach Anspruch 11 oder 12, wobei der Audiosignalrouter (25) und/oder der erste drahtlose Transceiver (24) ferner dazu eingerichtet ist/sind, zweite Verschlüsselungsschlüsseldaten zu erzeugen und/oder zweite Verschlüsselungsschlüsseldaten aus einem nicht flüchtigen Speicher (26) abzurufen, der in der Audiosteuerung (15) enthalten ist, wobei der Audiosignalrouter (25) ferner dazu eingerichtet ist, die erzeugten und/oder abgerufenen zweiten Verschlüsselungsschlüsseldaten über die Tongeräte-Schnittstelle (20) und/oder die Gateway-Schnittstelle (22) zu senden, und wobei die zweiten Verschlüsselungsschlüsseldaten Informationen umfassen, die von dem ersten und/oder dem zweiten Tonschnittstellengerät (13, 16) zum Herstellen einer verschlüsselten drahtlosen Audiokommunikation mit der Audiosteuerung (15) über den ersten drahtlosen Transceiver (24) benötigt werden.

14. Audiokommunikationssystem (30), umfassend ein erstes Tonschnittstellengerät (13) und eine Audiosteuerung (15), wobei das erste Tonschnittstellengerät (13) umfasst:
- eine Steuerungsschnittstelle (31) mit einem Steuerungs-Steckverbinder (32), der trennbar mit dem Tongeräte-Steckverbinder (21) der Audiosteuerung (15) verbindbar ist;
- einen zweiten drahtlosen Transceiver (34), der drahtlos mit dem ersten drahtlosen Transceiver (24) der Audiosteuerung (15) verbindbar ist;
- eine Tongerätesteuerung (35);
- einen Tonsender (40); und
- einen Tonempfänger (41),
wobei das erste Tonschnittstellengerät (13) dazu eingerichtet ist, das Tongeräte-Audioeingangssignal (SIH) an die Audiosteuerung (15) zu senden, basierend auf dem Ton der Stimme eines Benutzers aufgenommen über den Tonempfänger (41), und ferner dazu eingerichtet ist, das Tongeräte-Audioausgangssignal (SOH) von der Audiosteuerung (15) zu empfangen und einen entsprechenden Ausgangston über den Tonsender (40) bereitzustellen,
und wobei ferner mindestens eines gilt von:
- die Audiosteuerung (15) umfasst eine Audiosteuerung nach Anspruch 12, die Tongerätesteuerung (35) und/oder der zweite drahtlose Transceiver (34) ist/sind dazu eingerichtet, die ersten Verschlüsselungsschlüsseldaten zu erzeugen und/oder die ersten Verschlüsselungsschlüsseldaten aus einem nicht flüchtigen Speicher (42) abzurufen, der in dem Tonschnittstellengerät (13) enthalten ist, und die Audiogerätesteuerung (35) ist dazu eingerichtet, die erzeugten und/oder abgerufenen ersten Verschlüsselungsschlüsseldaten über die Steuerungsschnittstelle (31) an die Audiosteuerung (15) zu senden;
und
- die Audiosteuerung (15) umfasst eine Audiosteuerung nach Anspruch 13, die Tongerätesteuerung (35) ist dazu eingerichtet, die zweiten Verschlüsselungsschlüsseldaten von der Audiosteuerung (15) über die Steuerungsschnittstelle (31) zu empfangen und die zweiten Verschlüsselungsschlüsseldaten dem zweiten drahtlosen Transceiver (34) bereitzustellen, und der zweite drahtlose Transceiver (34) ist dazu eingerichtet, die zweiten Verschlüsselungsschlüsseldaten zu verwenden, um eine verschlüsselte drahtlose Audiokommunikation mit der Audiosteuerung (15) herzustellen.

## Revendications

1. Contrôleur audio (15) comprenant une interface de dispositif sonore (20) avec un connecteur de dispositif sonore (21), une interface de passerelle (22) avec un connecteur de passerelle (23), un premier émetteur-récepteur sans fil (24) et un routeur de signal audio (25),
dans lequel le routeur de signaux audio (25) est adapté pour :
- par l'intermédiaire de l'interface de dispositif sonore (20), établir communication audio avec un premier dispositif d'interface sonore (13) connecté de façon amovible au connecteur de dispositif sonore (21) et recevoir un signal d'entrée audio de dispositif sonore (SIH) ;
- par l'intermédiaire de l'interface de passerelle (22), établir communication audio avec un dispositif de passerelle audio (14) connecté de manière amovible au connecteur de passerelle (23) et recevoir un signal d'entrée audio de passerelle (SIG) ;
- transmettre un signal de sortie audio de dispositif sonore (SOH) comprenant le signal d'entrée audio de passerelle (SIG) via l'interface de dispositif sonore (20) ;
- transmettre un signal de sortie audio de passerelle (SOG) comprenant le signal d'entrée audio de dispositif sonore (SIH) via l'interface de passerelle (22) ;
- en réponse à la détection d'un événement de supervision prédéfini, et dans une période de temps pendant laquelle communication audio est établie avec le premier dispositif d'interface sonore (13) par l'intermédiaire de l'interface de dispositif sonore (20), établir communication audio sans fil avec un deuxième dispositif d'interface sonore (16) par l'intermédiaire du premier émetteur-récepteur sans fil (24) et transmettre un signal de sortie audio de superviseur (SOS) comprenant le signal d'entrée audio de passerelle (SIG) par l'intermédiaire du premier émetteur-récepteur sans fil (24) ;
dans lequel en outre :
- dans un mode câblé de fonctionnement du contrôleur audio (15), le routeur de signaux audio (25) est adapté pour établir communication audio avec le premier dispositif d'interface sonore (13) par l'intermédiaire de l'interface de dispositif sonore (20) et avec le dispositif de passerelle audio (14) par l'intermédiaire de l'interface de passerelle (22) ;
- dans un mode sans fil de fonctionnement du contrôleur audio (15), le contrôleur audio (15) est adapté pour communiquer avec le dispositif de passerelle audio (14) comme en mode câblé, et pour établir communication audio sans fil avec le premier dispositif d'interface sonore (13) par l'intermédiaire du premier émetteur-récepteur sans fil (24) au lieu de communiquer l'audio par l'intermédiaire de l'interface de dispositif sonore (20) ; et
- dans un mode de supervision de fonctionnement du contrôleur audio (15), le routeur de signaux audio (25) est adapté pour maintenir le fonctionnement comme dans le mode câblé et établir en outre communication audio sans fil avec le deuxième dispositif d'interface sonore (16) par l'intermédiaire de l'émetteur-récepteur sans fil (24),
**caractérisé en ce que**
lorsque le contrôleur audio (15) est dans le mode sans fil, le routeur de signaux audio (25) est adapté pour, en réponse à la détection de l'événement de supervision prédéfini, commuter d'abord le contrôleur audio (15) au mode câblé et ensuite commuter le contrôleur audio (15) au mode supervision.

2. Contrôleur audio selon la revendication 1, dans lequel en outre au moins l'un parmi :
- l'événement de supervision prédéfini comprend le routeur de signaux audio (25) recevant une requête de supervision prédéfinie par l'intermédiaire de l'interface de dispositif sonore (20), de l'interface de passerelle (22) ou du premier émetteur-récepteur sans fil (24) ;
- le contrôleur audio comprend en outre un récepteur sans fil à courte portée (29) adapté pour transmettre une requête de supervision prédéfinie au routeur de signaux audio (25) en réponse à la détection d'une approche du deuxième dispositif d'interface sonore (16), et l'événement de supervision prédéfini comprend le routeur de signaux audio (25) recevant la requête de supervision prédéfinie à partir du récepteur sans fil à courte portée (29) ;
et
- l'événement de supervision prédéfini comprend le routeur de signaux audio (25) détectant une action de supervision prédéfinie par un utilisateur via une interface utilisateur (28) comprise par le contrôleur audio.

3. Contrôleur audio selon la revendication 1 ou 2, dans lequel le routeur de signaux audio (25) est en outre adapté pour établir communication audio sans fil avec le premier dispositif d'interface sonore (13) par l'intermédiaire du premier émetteur-récepteur sans fil (24) en réponse à la détection d'un événement de déconnexion prédéfini,
et dans lequel en outre au moins l'un de :
- l'événement de déconnexion prédéfini comprend le routeur de signaux audio (25) détectant une déconnexion du connecteur de dispositif sonore (21) ;
- l'événement de déconnexion prédéfini comprend le routeur de signaux audio (25) recevant une requête de déconnexion prédéfinie par l'intermédiaire de l'interface de dispositif sonore (20), de l'interface de passerelle (22) ou du premier émetteur-récepteur sans fil (24) ;
et
- l'événement de déconnexion prédéfini comprend le routeur de signaux audio (25) détectant une action de déconnexion prédéfinie par un utilisateur via une interface utilisateur (28) comprise par le contrôleur audio.

4. Contrôleur audio selon l'une quelconque des revendications précédentes, dans lequel le routeur de signaux audio (25) est en outre adapté pour, en réponse à la détection de l'événement de supervision prédéfini ou d'un événement de connexion prédéfini, et dans - ou au début - d'une période de temps pendant laquelle la communication audio est établie avec le premier dispositif d'interface sonore (13) par l'intermédiaire de l'interface de dispositif sonore (20), mettre fin à la communication audio sans fil avec le premier dispositif d'interface sonore (13) par l'intermédiaire du premier émetteur-récepteur sans fil (24),
et dans lequel en outre au moins l'un de :
- l'événement de connexion prédéfini comprend le routeur de signaux audio (25) détectant une connexion du connecteur de dispositif sonore (21) ;
- l'événement de connexion prédéfini comprend le routeur de signaux audio (25) recevant une requête de connexion prédéfinie par l'intermédiaire de l'interface de dispositif sonore (20), de l'interface de passerelle (22) ou du premier émetteur-récepteur sans fil (24) ;
et
- l'événement de connexion prédéfini comprend le routeur de signaux audio (25) détectant une action de connexion prédéfinie par un utilisateur via une interface utilisateur (28) comprise par le contrôleur audio.

5. Contrôleur audio selon l'une quelconque des revendications précédentes, dans lequel le routeur de signaux audio (25) est en outre adapté pour :
- recevoir par l'intermédiaire de l'interface de dispositif sonore (20) des premières données d'identité indiquant une identité du premier dispositif d'interface sonore (13) ;
- recevoir par l'intermédiaire du premier émetteur-récepteur sans fil (24) des deuxièmes données d'identité indiquant une identité du deuxième dispositif d'interface sonore (16) ;
- comparer les identités indiquées par les premières et les deuxièmes données d'identité ; et
- établir communication audio sans fil avec le deuxième dispositif d'interface sonore (16) en fonction des identités comparées différant les unes des autres.

6. Contrôleur audio selon l'une quelconque des revendications précédentes, dans lequel en outre, dans une période de temps pendant laquelle communication audio sans fil est établie avec le deuxième dispositif d'interface sonore (16), le routeur de signaux audio (25) est en outre adapté pour fournir qu'au moins l'un parmi :
- le signal de sortie audio de superviseur (SOS) comprend en outre le signal d'entrée audio de dispositif sonore (SIH) ;
- le signal de sortie audio de dispositif sonore (SOH) comprend en outre un signal d'entrée audio de superviseur (SIS) reçu par le premier émetteur-récepteur sans fil (24) ;
et
- le signal de sortie audio de passerelle (SOG) comprend en outre un signal d'entrée audio de superviseur (SIS) reçu par le premier émetteur-récepteur sans fil (24).

7. Contrôleur audio selon l'une quelconque des revendications précédentes, et comprenant en outre une alimentation électrique (27) adaptée pour recevoir de l'énergie électrique par l'intermédiaire du connecteur de passerelle (23) à partir d'un dispositif de passerelle audio externe connecté (14) et pour fournir de l'énergie électrique au premier émetteur-récepteur sans fil (24) et au routeur de signaux audio (25).

8. Contrôleur audio selon la revendication 7, dans lequel l'alimentation électrique (27) est en outre adaptée pour fournir de l'énergie électrique par l'intermédiaire du connecteur de dispositif sonore (21) à un dispositif d'interface sonore externe connecté (13).

9. Contrôleur audio selon l'une quelconque des revendications précédentes, dans lequel chacun ou l'un quelconque du connecteur de dispositif sonore (21) et du connecteur de passerelle (23) comprend un connecteur électromécanique et / ou un connecteur optomécanique, tel que par exemple une fiche USB A, un réceptacle USB A, une fiche USB B, un réceptacle USB B, une fiche USB C, un réceptacle USB C, une fiche S/PDIF, un réceptacle S/PDIF, une fiche jack audio, un réceptacle jack audio, ou similaire.

10. Contrôleur audio selon la revendication 9, dans lequel le connecteur de dispositif sonore (21) comprend un réceptacle, et le connecteur de passerelle (23) comprend une fiche qui est compatible avec le réceptacle du connecteur de dispositif sonore (21), ou vice versa, dans lequel la compatibilité est prévue au moins pour l'établissement de communication audio.

11. Contrôleur audio selon l'une quelconque des revendications précédentes, dans lequel le premier émetteur-récepteur sans fil (24) comprend un émetteur-récepteur sans fil sécurisé adapté pour transmettre et recevoir des signaux audio cryptés, tel qu'un émetteur-récepteur Bluetooth, un émetteur-récepteur Wi-Fi, un émetteur-récepteur DECT, ou similaire.

12. Contrôleur audio selon la revendication 11, dans lequel le routeur de signaux audio (25) est en outre adapté pour recevoir des premières données de clé de cryptage par l'intermédiaire de l'interface de dispositif sonore (20) et / ou de l'interface de passerelle (22) et pour fournir les premières données de clé de cryptage au premier émetteur-récepteur sans fil (24), et dans lequel le premier émetteur-récepteur sans fil (24) est en outre adapté pour utiliser les premières données de clé de cryptage pour établir communication audio sans fil cryptée avec le premier et / ou le deuxième dispositif d'interface sonore (13, 16).

13. Contrôleur audio selon la revendication 11 ou 12, dans lequel le routeur de signaux audio (25) et / ou le premier émetteur-récepteur sans fil (24) est en outre adapté pour générer des deuxièmes données de clé de cryptage et / ou récupérer des deuxièmes données de clé de cryptage à partir d'une mémoire non volatile (26) comprise par le contrôleur audio (15), dans lequel le routeur de signaux audio (25) est en outre adapté pour transmettre les deuxièmes données de clé de cryptage générées et / ou extraites par l'intermédiaire de l'interface de dispositif sonore (20) et / ou de l'interface de passerelle (22), et dans lequel les deuxièmes données de clé de cryptage comprennent des informations requises par le premier et / ou le deuxième dispositif d'interface sonore (13, 16) pour établir communication audio sans fil cryptée avec le contrôleur audio (15) par l'intermédiaire du premier émetteur-récepteur sans fil (24).

14. Système de communication audio (30) comprenant un premier dispositif d'interface sonore (13) et un contrôleur audio (15), dans lequel le premier dispositif d'interface sonore (13) comprend :
- une interface de contrôleur (31) avec un connecteur de contrôleur (32) pouvant être connecté de manière amovible au connecteur de dispositif sonore (21) du contrôleur audio (15) ;
- un deuxième émetteur-récepteur sans fil (34) pouvant être connecté sans fil au premier émetteur-récepteur sans fil (24) du contrôleur audio (15) ;
- un contrôleur de dispositif sonore (35) ;
- un émetteur de son (40) ; et
- un récepteur de son (41),
dans lequel le premier dispositif d'interface sonore (13) est adapté pour transmettre le signal d'entrée audio de dispositif sonore (SIH) au contrôleur audio (15), sur la base du son de la voix d'un utilisateur capté par le récepteur sonore (41), et est en outre adapté pour recevoir le signal de sortie audio de dispositif sonore (SOH) à partir du contrôleur audio (15) et fournir un son de sortie correspondant par l'intermédiaire de l'émetteur de son (40),
et dans lequel en outre au moins l'un de :
- le contrôleur audio (15) comprend un contrôleur audio selon la revendication 12, le contrôleur de dispositif sonore (35) et / ou le deuxième émetteur-récepteur sans fil (34) est adapté pour générer les premières données de clé de cryptage et / ou récupérer les premières données de clé de cryptage provenant d'une mémoire non volatile (42) comprise par le premier dispositif d'interface sonore (13), et le contrôleur de dispositif sonore (35) est adapté pour transmettre les premières données de clé de cryptage générées et / ou récupérées par l'intermédiaire de l'interface de contrôleur (31) au contrôleur audio (15) ;
et
- le contrôleur audio (15) comprend un contrôleur audio selon la revendication 13, le contrôleur de dispositif sonore (35) est adapté pour recevoir les deuxièmes données de clé de cryptage à partir du contrôleur audio (15) par l'intermédiaire de l'interface de contrôleur (31) et pour fournir les deuxièmes données de clé de cryptage au deuxième émetteur-récepteur sans fil (34), et le deuxième émetteur-récepteur sans fil (34) est adapté pour utiliser les deuxièmes données de clé de cryptage pour établir communication audio sans fil cryptée avec le contrôleur audio (15).
